# NEUE EUROPÄISCHE PATENTSCHRIFT

(11) **EP 2 120 656 B2**
(45) Veröffentlichungstag und Bekanntmachung des Hinweises auf die Entscheidung über den Einspruch: **13.03.2019**
(45) Hinweis auf die Patenterteilung: 29.02.2012
(21) Anmeldenummer: 08700994.0
(22) Anmeldetag: 07.01.2008
(51) Int. Cl.: A47J 31/44

(54) **VERFAHREN UND VORRICHTUNG ZUR ERZEUGUNG VON MILCHSCHAUM ODER MILCHGETRÄNKEN**
METHOD AND APPARATUS FOR THE PRODUCTION OF MILK FOAM OR MILK-BASED DRINKS
PROCÉDÉ ET DISPOSITIF POUR PRODUIRE DE LA MOUSSE DE LAIT OU DES BOISSONS À BASE DE LAIT

(30) Priorität: 09.01.2007 CH 15072007; 18.05.2007 CH 802072007
(43) Veröffentlichungstag der Anmeldung: 25.11.2009
(73) Patentinhaber: Steiner AG Weggis, 6353 Weggis (CH)
(72) Erfinder: SCHINDLER, Thorsten, 6353 Weggis (CH); IN-ALBON, Jean-Paul, 1957 Ardon (CH)
(74) Vertreter: Luchs, Willi
(86) Internationale Anmeldenummer: PCT/EP2008/000048
(87) Internationale Veröffentlichungsnummer: WO 2008/083941

(56) Entgegenhaltungen:
- EP-A- 0 157 069
- EP-A- 1 593 330
- EP-A1- 0 485 350
- WO-A2-2006/053016
- DE-A1-102004 004 817
- US-A1- 2002 141 742
- US-A1- 2003 232 115
- US-B1- 6 192 785

## Beschreibung

Die Erfindung betrifft ein Verfahren zur Erzeugung von Milchschaum oder Milchgetränken gemäss dem Oberbegriff des Anspruches 1, eine Vorrichtung zum Durchführen des Verfahrens, sowie eine Kaffeemaschine umfassend eine derartige Vorrichtung.

Gemäss der Druckschrift EP-A-0 157 069 ist ein Milchbehälter, eine Förderpumpe, ein Zweiwegventil, ein eine heizende Flüssigkeit enthaltender Heizbehälter, ein in diesem enthaltender Rohrwendel zur Erzeugung eines Druckes der Milch, eine einstellbare Düse zum Mischen der Milch mit der Luft sowie ein Formkörper vorgesehen, mittels welchem das Milch-LuftGemisch in einer durch diesen Formkörper begrenzenden Kammer der bezweckte Schaum erzeugt werden soll. Es kann entweder die erhitzte Milch durch die Leitung oder aber kalte Milch durch die Leitung in dieses Gehäuse geführt werden, in welchem dann die Vermischung mit Luft erfolgt.

Nachteilig bei dieser Einrichtung ist diese insgesamt gesehen aufwendige Konstruktion mit dem Heizbehälter, bei welchem eine darin enthaltende Flüssigkeit und mit dieser dann die durch diesen Rohrwendel geförderte Milch erhitzt wird, und mit dieser aufwendig gebauten Vorrichtung, welche aus einer Düse und einer Luftzufuhr, dieser Kammer und dem diese begrenzenden Formkörper besteht. Es sind damit zwei Drosselstellen für die entweder aus der einen oder andern Leitung über diese Ventile fliessende Milch gegeben.

Aus der EP-A-1 593 330 ist ein Verfahren bzw. einer Vorrichtung zur Erzeugung von Milchschaum oder von warmen Milchgetränken bekannt, bei welchen kalte Milch mittels einer Pumpe aus einem Behälter angesaugt und durch einen Durchlauferhitzer geleitet und dabei erhitzt wird, wonach sie über eine Drosselstelle zu einem Auslass gefördert wird. Damit kann auf einfache Weise ein äusserst bekömmlicher Milchschaum erzeugt werden, wenn der Milch entsprechend Luft oder ein Gas beigemischt wird.

Der vorliegenden Erfindung liegt die Aufgabe zugrunde, ein Verfahren der eingangs genannten Art vorzuschlagen sowie eine Vorrichtung zum Durchführen des Verfahrens zu schaffen, mit denen die Getränkeauswahl erweitert werden kann.

Diese Aufgabe wird erfindungsgemäss durch ein Verfahren mit den Merkmalen des Anspruches 1 sowie durch eine Vorrichtung mit den Merkmalen des Anspruches 2 gelöst.

Bevorzugte Weitergestaltungen des erfindungsgemässen Verfahrens sowie der erfindungsgemässen Vorrichtung bilden den Gegenstand der abhängigen Ansprüche.

Erfindungsgemäss kann kalter Milchscbaum von überraschend guter Qualität oder kalte Milch bzw. kaltes Milchgetränk zum Auslass gefördert und dort in einem Behälter beispielsweise einer Tasse oder einem Glas aufgefangen werden. Dies ist insbesondere in bestimmten Ländern mit warmen Klima oder während bestimmter Jahreszeiten von Vorteil. Vorzugsweise kann der Milchschaum, die Milch oder das Milchgetränk sowohl im kalten als auch im warmen Zustand herausgelassen werden. Die erfindungsgemässe Vorrichtung zur Erzeugung von Milchschaum oder Milchgetränken kann ein selbständiges Gerät oder einen Bestandteil einer Kaffeemaschine bilden.

Die Erfindung wird nachfolgend anhand der Zeichnung näher erläutert. Es zeigt:

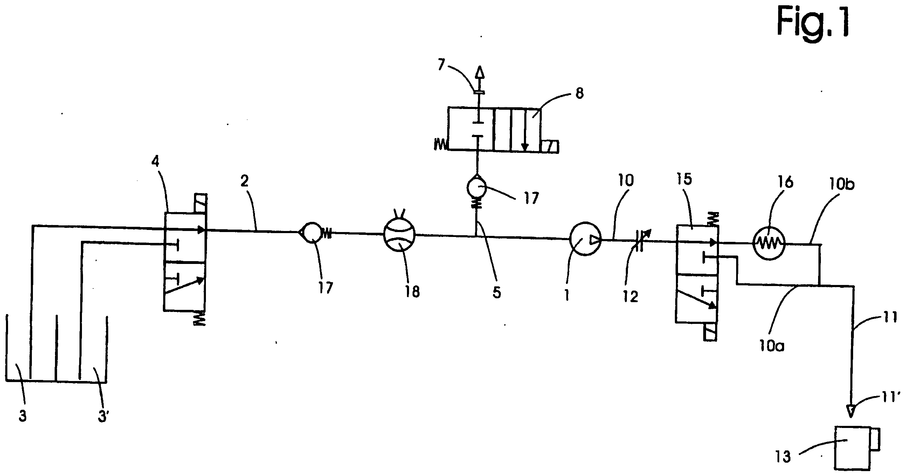

- Fig. 1: schematisch eine erfindungsgemässe Vorrichtung zur Erzeugung von Milchschaum oder von Milchgetränken.

Gemäss Fig.1 wird die für die Herstellung von Milchschaum oder von Milchgetränken benötigte, kalte Milch mittels einer Pumpe 1, vorzugsweise einer Zahnradpumpe, über eine Ansaugeleitung 2 aus einem Behälter 3 angesaugt. Wie in Fig. 1 angedeutet, können auch mehrere Behälter 3, 3' zur Verfügung stehen und über ein Ventil 4 wahlweise an die Ansaugeleitung 2 angeschlossen werden, die beispielsweise auch Milch mit verschiedenen Zusätzen wie Schokolade, Vanille etc. enthalten können. diese Zusätze können der Milch aber genau portioniert zugegeben werden.

Erfindungsgemäss kann kalter Milchschaum von überraschend guter Qualität oder kalte Milch bzw. kaltes Milchgetränk zum Auslass 11' gefördert und dort in einem Behälter 13, beispielsweise einer Tasse oder einem Glas aufgefangen werden.

In die Ansaugeleitung 2 mündet eine Luftzufuhrleitung 5, über welche der Milch eine bestimmte Menge Luft (oder ein Gas) beigemischt werden kann. Die Luftmenge kann über einen Luftmengeregler oder über ein Drosselorgan, z.B. eine Düse 7, bestimmt werden. Bei der Luftzufuhrleitung 5 ist ein Betätigungsventil 8 vorgesehen, mittels dem die Luftzufuhr unterbunden werden kann, wenn beabsichtigt wird, ein Milchgetränk ohne Schaum zu erzeugen. Mit anderen Worten, je nach Stellung des Betätigungsventils 8 kann ein Milch/Luft-Gemisch oder die Milch alleine von der Pumpe 1 angesaugt und durch eine Leitung 10 zu einer Auslassleitung 11 und zu einem Auslass 11' gepumpt werden, und zwar mitunter über eine Drosselstelle 12, die einen Überdruck in dem System bewirkt und über die die geförderte Milch- oder Milchschaummenge bestimmt werden kann. Bei der Drosselstelle 12 kann es sich um ein Drosselventil oder eine Düse handeln. Bei dieser Drosselstelle wird die Durchlassöffnung verjüngt und anschliessend wieder ausgedehnt, womit das zugeführte Milch/LuftGemisch zu einem Milchschaum umgewandelt wird.

Die als Rohr oder Schlauch vorgesehene Auslassleitung 11 weist vorteilhaft eine bestimmte Länge auf, vorzugsweise bis zu 30 cm, damit sich der Milchschaum in dieser Auslassleitung 11 weiter bilden und sich insbesondere auch festigen kann, damit ein hochwertiger und in seiner Konsistenz bleibender Schaum erzeugt wird, wenn er zum Beispiel in eine Tasse 13 geführt worden ist.

Es besteht aber auch die Möglichkeit, auch warme Milch bzw. Milchgetränke oder warmen Milchschaum zu erzeugen und herauszulassen. Zu diesem Zweck wird die Leitung 10 über ein Ventil 15 wahlweise einschaltbare Parallelabschnitte 10a, 10b auf, wobei einem dieser Auslassleitungs-Abschnitte ein Durchlauferhitzer 16 zugeordnet ist. Je nach Stellung des Ventils 15 kann über den einen Parallelabschnitt 10a kalter Milchschaum oder kalte Milch bzw. Milchgetränke direkt zum Auslass 11' gefördert werden, oder es wird der andere Auslassleitungs-Abschnitt 10b eingeschaltet, und der Milchschaum oder die Milch vor dem Herauslassen im Durchlauferhitzer 16 erwärmt.

Entsprechende Rückschlagventile 17 im System verhindern ein Zurücklaufen der Milch bzw. der Luft oder des Gases. Es wird auch die Durchflussmenge der von der Pumpe 1 angesaugten Milch gemessen (Messgerät 18). Es könnte aber auch eine Zeitmessung für die Bestimmung der Durchflussmenge erfolgen.

Die erfindungsgemässe Vorrichtung zur Erzeugung von Milchschaum oder Milchgetränken kann - ähnlich wie die Vorrichtung nach der bereits erwähnten EP-A-1 593 330 - einfach gereinigt werden. Sie kann ein selbständiges Gerät oder einen Bestandteil einer Kaffeemaschine bilden.

Als Pumpe könnte nebst der erwähnten Zahnradpumpe auch eine Kolbenpumpe, eine Oszillations- oder Vibrationspumpe verwendet werden. Vorteilhaft wird mit der Pumpe ein Druck zwischen 0.5 bis 15 bar erzeugt.

## Patentansprüche

1. Verfahren zur Erzeugung von Milchschaum oder Milchgetränken, bei welchem Milch mittels einer Pumpe (1) aus einem Behälter (3, 3') angesaugt und zu einem Auslass (11') gefördert wird, wobei der Milch Luft bzw. ein Gas beigemischt wird, wobei das Milch/Luft-Gemisch im kalten Zustand zu Milchschaum verarbeitet und als kalter oder heisser Milchschaum zum Auslass (11') gefördert wird, **dadurch gekennzeichnet, dass** die von der Pumpe (1) angesaugte und mit der Luft bzw. dem Gas vermischte Milch bzw. das Milch/LuftGemisch über eine Drosselstelle (12) wahlweise direkt oder über einen Durchlauferhitzer (16) zum Auslass (11') gefördert wird.

2. Vorrichtung zur Durchführung des Verfahrens nach Anspruch 1, mit einer die Milch von einem Behälter (3, 3') über eine Ansaugleitung (2) ansaugenden Pumpe (1), mit einer von der Pumpe (1) zu einem Auslass (11') führenden Auslassleitung (10), mit einer in die Ansaugeleitung (2) mündenden Luftzufuhrleitung (5), **dadurch gekennzeichnet, dass** die Auslassleitung (10) zwischen der Drosselstelle (12) und dem Auslass (11') zwei über ein Ventil (15) wahlweise einschaltbare Parallelabschnitte (10a, 10b) aufweist, wobei einem dieser Auslassleitungs-Abschnitte ein Durchlauferhitzer (16) zugeordnet ist.

3. Vorrichtung nach Anspruch 2, **dadurch gekennzeichnet, dass** die Auslassleitung (10) zwei über ein Ventil (15) wahlweise einschaltbare Parallelabschnitte (10a, 10b) aufweist, wobei einem dieser Auslassleitungs-Abschnitte ein Durchlauferhitzer (16) zugeordnet ist.

4. Vorrichtung nach Anspruch 2, **dadurch gekennzeichnet, dass** die Drosselstelle (12) durch ein Drosselventil oder eine fixe Düse gebildet ist, mittels welcher eine Verjüngung und eine nachfolgende Ausdehnung der Durchlassöffnung erfolgt.

5. Vorrichtung nach einem der vorhergehenden Ansprüche 2 bis 4, **dadurch gekennzeichnet, dass** als Pumpe (1) eine Zahnradpumpe, eine Kolbenpumpe, eine Oszillations- oder eine Vibrationspumpe verwendbar ist, mittels derer ein Druck zwischen 3 bis 4 bar erzeugbar ist.

6. Vorrichtung nach einem der vorhergehenden Ansprüche 2 bis 5, **dadurch gekennzeichnet, dass** mit der Pumpe (1) ein Druck zwischen 0.5 bis 15 bar erzeugbar ist.

7. Vorrichtung nach einem der vorhergehenden Ansprüche 2 bis 6, **dadurch gekennzeichnet, dass** die als Rohr oder Schlauch vorgesehene Auslassleitung (11) eine bestimmte Länge aufweist, vorzugsweise bis zu 30 cm, damit sich der Milchschaum in dieser Auslassleitung (11) weiter bildet und festigt, um so einen hochwertigen und in seiner Konsistenz bleibender Schaum zu erzeugen, wenn er zum Beispiel in den Behälter (13) geführt worden ist.

8. Kaffeemaschine umfassend eine Vorrichtung nach einem der Ansprüche 2 bis 7.

## Claims

1. A method for the production of milk foam or milk-based drinks, wherein milk is sucked with a pump (1) out of a container (3, 3') and conveyed to an outlet (11'), air or a gas being added to the milk, whereby the milk/air mixture is processed in a cold state into milk foam and conveyed as cold or hot milk foam to the outlet (11'), **characterised in that**
the milk or the milk/air mixture, which is sucked by the pump (1) und mixed with the air respectively the gas, is selectively conveyed via a throttle point (12) directly or via a flow heater (16) to the outlet (11').

2. An apparatus for implementing the method according to claim 1, having a pump (1) sucking the milk from a container (3, 3') via a suction line (2), having an outlet line (10) leading from the pump (1) to an outlet (11'), having an air supply line (5) opening out into the suction line (2), **characterised in that** the outlet line (10) has two parallel sections (10a, 10b), which can be enabled selectively by means of a valve (15) between the throttle point (12) and the outlet (11'), a flow heater (16) being assigned to one of these outlet line sections.

3. The apparatus according to claim 2, **characterised in that** the outlet line (10) has two parallel sections (10a, 10b) which can be enabled selectively by means of a valve (15), a flow heater (16) being assigned to one of these outlet line sections,

4. The apparatus according to claim 2, **characterised in that** the throttle point (12) is formed by a throttle valve or a fixed nozzle by means of which tapering and subsequent expansion of the passage opening is implemented.

5. The apparatus according to any of the preceding claims 2 to 4, **characterised in that** a gear pump, a piston pump, an oscillation or a vibration pump can be used as a pump (1), with which a pressure of between 3 till 4 bar can be produced.

6. The apparatus according to any of the preceding claims 2 to 5, **characterised in that** with the pump (1) a pressure of between 0.5 till 15 bar can be produced.

7. The apparatus according to any of the preceding claims 2 to 6, **characterised in that** the outlet line (11) provided as a pipe or tube is of a specific length, preferably up to 30 cm, so that the milk foam continues to form and stabilises in this outlet line (11) in order to thus produce a high-quality foam with a constant consistency when, for example, it has been passed into the container (13).

8. A coffee machine comprising an apparatus according to any of claims 2 to 7.

## Revendications

1. Procédé pour générer de la mousse de lait ou des boissons à base de lait, dans lequel du lait est aspiré à l'aide d'une pompe (1) depuis d'un récipient (3, 3') et est acheminé vers une sortie (11'), le lait étant mélangé à de l'air ou à un gaz, le mélange lait / air,
à l'état froid étant transformé en mousse de lait, et étant acheminé en tant que mousse de lait froide ou chaude vers la sortie (11'), **caractérisé en ce que**,
le lait aspiré par la pompe (1) et mélangé à de l'air ou à du gaz ou le mélange lait / air est directement acheminé vers la sortie (11') de façon sélective par le biais d'un point d'étranglement (12) ou d'un chauffe-lait instantané (16).

2. Dispositif pour mettre en oeuvre ce procédé selon la revendication 1, avec une pompe (1) qui aspire le lait à partir d'un récipient (3, 3') par l'intermédiaire d'une conduite d'aspiration (2), avec une conduite (10) de sortie allant de la pompe (1) à une sortie (11'), avec une conduite d'amenée d'air (5) débouchant dans la conduite d'aspiration (2), **caractérisé**
**en ce que**,
la conduite (10) de sortie comprend entre le point d'étranglement (12) et la sortie (11') une paire de sections parallèles (10a, 10b) qui peut être mise en marche de façon sélective par le bais d'une vanne (15), un chauffe-lait instantané (16) étant attribué à l'une des sections de la conduite de sortie.

3. Dispositif selon la revendication 2, **caractérisé en ce que** la conduite (10) de sortie comprend une paire de sections parallèles (10a, 10b) qui peut être mise en marche de façon sélective par le biais d'une vanne, un chauffe-lait instantané (16) étant attribué à l'une des sections de la conduite de sortie.

4. Dispositif selon la revendication 2, **caractérisé en ce que** le point d'étranglement (12) est formé par une vanne d'étranglement ou par une buse fixe, par le biais de laquelle a lieu un rétrécissement suivi d'un élargissement de l'ouverture de passage.

5. Dispositif selon l'une des revendications précédentes 2 à 4, **caractérisé en ce qu'**on peut utiliser comme pompe (1), une pompe à engrenage, une pompe à piston, une pompe à oscillation ou une pompe à vibration, par le biais de laquelle une pression de 3 à 4 bar peut être créée.

6. Dispositif selon l'une des revendications précédentes 2 à 5, **caractérisé en ce qu'**une pression de 0,5 à 15 bar peut être créée avec la pompe (1).

7. Dispositif selon l'une des revendications précédentes 2 à 6, **caractérisé en ce que** la conduite (11) de sortie prévue en tant que tube ou tuyau présente une certaine longueur, de préférence allant jusqu'à 30 cm pour que la mousse de lait continue à se former et à se solidifier dans cette conduite (11) de sortie, pour ainsi générer une mousse de haute qualité et une mousse qui garde sa consistance lorsqu'elle est par exemple introduite dans le récipient (13),

8. Machine à café comprenant un dispositif selon l'une des revendications 2 à 7.
